# EUROPÄISCHE PATENTSCHRIFT

(11) **EP 0 704 781 B1**
(45) Veröffentlichungstag und Bekanntmachung des Hinweises auf die Patenterteilung: **01.12.1999**
(21) Anmeldenummer: 95114574.7
(22) Anmeldetag: 15.09.1995
(51) Int. Cl.: G05B 19/416

(54) **Geschwindigkeitsabhängige Beschleunigungskennlinie**
Speed dependent acceleration characterising curve
Courbe caractéristique d'accélération dépendant de la vitesse

(30) Priorität: 29.09.1994 DE 4434924
(43) Veröffentlichungstag der Anmeldung: 03.04.1996
(73) Patentinhaber: SIEMENS AKTIENGESELLSCHAFT, 80333 München (DE)
(72) Erfinder: Westermeyer, Wilhelm, Dr., D-90425 Nürnberg (DE)

(56) Entgegenhaltungen:
- EP-A- 0 214 309
- DE-A- 4 411 390
- FR-A- 2 402 899

## Beschreibung

Die Erfindung bezieht sich auf ein Verfahren zur Geschwindigkeitsführung von elektrischen Antrieben, insbesondere für Werkzeugmaschinensteuerungen.

Bei modernen industriellen Steuerungen zum Einsatz beispielsweise bei Werkzeugmaschinen oder Robotern stellt sich häufig das Problem, daß bei für die Antriebe verwendeten Elektromotoren das Drehmoment bei höheren Drehzahlen abfällt. Grund dafür sind vor allem die Kommutierungsgrenze bei Stromrichterantrieben und Begrenzungen bei der Zwischenkreisspannung. Dies hat zur Folge, daß sich bei höheren Achsgeschwindigkeiten die mögliche Achsbeschleunigung zwangsläufig verringert. Eine Geschwindigkeitsführung, die den Abfall des Drehmoments nicht berücksichtigt, überlastet die Antriebe. Zum Einsatz in numerischen Steuerungen von Werkzeugmaschinen oder Robotern hat dies zur Folge, daß im Rahmen der Bahnsteuerung, sei es durch Werkzeug- oder Tischbewegungen, der axiale Schleppfehler, ein Geschwindigkeitsfehler in Längsrichtung des Werkstücks, vergrößert wird, woraus ein Konturfehler am zu fertigenden Werkstück resultiert. Da im Zuge der technischen Entwicklung an Werkzeugmaschinen immer höhere Anforderungen gestellt werden, weil immer engere Toleranzen gefertigt werden müssen und somit exaktere feinste Konturen zu erzeugen sind, ist man bestrebt, die auftretenden Nachformfehler aufgrund der Eigenschaften der elektrischen Antriebe zu minimieren.

Es ist bekannt, daß ein herkömmliches Verfahren zur Geschwindigkeitsführung zur Erfüllung dieser Erfordernisse bei Werkzeugmaschinensteuerungen nur entweder eine geschwindigkeitsunabhängige Beschleunigungsbegrenzung berücksichtigt, die unabhängig von der jeweiligen Drehzahl des elektrischen Antriebes die mögliche Achsbeschleunigung begrenzt.

Über eine Beschleunigungs-/Abbremseinheit wird die Achsbeschleunigung reduziert, wenn das aktuelle Drehmoment einen vorgegebenen Schwellwert überschreitet. Dadurch wird ein unnötiger Halt des Antriebs vermieden. Dies hat jedoch eine lediglich konstante Beschleunigungsbegrenzung unabhängig von der Drehzahl zur Folge (vgl. dazu die EP-A-0 214 309).

Oder es wird mittels eines Glättungsoperators eine Anzahl der Geschwindigkeitswerte gefiltert (vgl. dazu die EP-0 477 412 A1).

Diese beiden standardgemäß eingesetzten Verfahren der Geschwindigkeitsführung in Werkzeugmaschinensteuerungen besitzen jedoch den Nachteil, daß man, sofern der obere Drehzahlbereich eines elektrischen Antriebes ausgenutzt wird, entweder die zulässige Beschleunigungsgrenze entsprechend klein wählen muß, wodurch die Leistungsfähigkeit der Maschine nicht ausgenutzt wird, oder man aber einen axialen Schleppfehler und einen dadurch bedingten Konturfehler in diesen Beschleunigungsphasen in Kauf nehmen muß.

Der Erfindung liegt daher die Aufgabe zugrunde, ein Verfahren zur Geschwindigkeitsführung so auszubilden, daß die oben dargestellten durch das abfallende Drehmoment bei höheren Drehzahlen elektrischer Antriebe bedingten Schwierigkeiten verringert werden können und dieses Verfahren unter der Berücksichtigung von Sollvorgaben, z.B. aus der NC-Programmierung, eingesetzt werden kann.

Gemäß der Erfindung wird diese Aufgabe durch folgende Verfahrensschritte gelöst:
1.1 die Bahngeschwindigkeit wird so geführt, daß eine Beschleunigungsbegrenzungskennlinie berücksichtigt wird, indem die Beschleunigungskennlinie im Geschwindigkeitsbereich des Antriebes mit konstantem Drehmoment mit konstanter Beschleunigung verläuft und im Drehzahlbereich des Antriebes mit abfallendem Drehmoment mit daran angepaßter fallender Beschleunigung verläuft,
1.2 nach Anfahren einer Sollgeschwindigkeit wird auf dieser mit konstanter Geschwindigkeit im Sinne einer Geschwindigkeitsobergrenze verfahren,
1.3 vorgegebene Zielgeschwindigkeiten an bestimmten Zielpunkten werden angefahren,
1.4 auf solche Zielgeschwindigkeiten wird unter Berücksichtigung eines durch die geschwindigkeitsabhängige Beschleunigungskennlinie bedingten kürzestmöglichen Bremswegs vorausschauend zu einem möglichst späten Zeitpunkt so abgebremst, daß die Zielgeschwindigkeit am Zielpunkt mit Beschleunigung Null erreicht wird.

Eine erste vorteilhafte Ausgestaltung der vorliegenden Erfindung, welche das vorrausschauende Abbremsen auf besonders effektive und einfache Art realisiert, ist durch folgende Verfahrensschritte gekennzeichnet:
2.1 liegt ein Teil der Zielanfahrphase zum vorausschauenden Abbremsen auf Zielgeschwindigkeit zum Zielpunkt im Bereich der fallenden Beschleunigungskennlinie, so wird bei einer taktgesteuerten Geschwindigkeitsführung in jedem Takt der durch die geschwindigkeitsabhängige Beschleunigungskennlinie bedingte kürzestmögliche Bremsweg erneut bestimmt und eine eventuell daraus resultierende Wegreserve ermittelt,
2.2 sofern keine Wegreserve mehr besteht, wird der Abbremsvorgang eingeleitet.

Weitere besonders vorteilhafte Ausprägungen der vorliegenden Erfindung, die den technisch bedingten Verlauf des abfallenden Drehmoments berücksichtigen und die Einsatzmöglichkeiten erweiteren, sind gekennzeichnet durch folgende Merkmale:
3.1 die Beschleunigungskennlinie beschreibt im Bereich fallender Beschleunigung einen hyperbolischen Verlauf,
3.2 die geschwindigkeitsabhängige Beschleunigungskennlinie wird so geführt, daß sie die Beschleunigungsmöglichkeiten eines elektrischen Antriebes nicht vollständig ausschöpft, sondern es wird ein Puffer als Regelreserve beispielsweise für die Berücksichtigung eines Vorschuboverrides belassen,
3.3 zur Verringerung des Rechenaufwands wird die Beschleunigung während der Dauer eines Taktes als konstant betrachtet.

Die Merkmale 3.1 bis 3.3 sind auch jeweils für sich gesehen, vorteilhaft auf das erfindungsgemäße Verfahren anzuwenden.

Die mit der Erfindung erzielten Vorteile bestehen insbesondere darin, daß die Leistungsfähigkeit des eingesetzten elektrischen Antriebes zu jeder Zeit voll ausgenutzt wird und dabei gleichzeitig eine Überlastung der Antriebe bei hohen Drehzahlen über dem kritischen Drehzahlbereich sowie daraus resultierende axiale Schleppfehler vermieden werden können. Hinzu kommt, daß sich die aufgeführten Vorteile mit vorliegender Erfindung besonders effektiv und kostengünstig realisieren lassen.

Ein Ausführungsbeispiel der Erfindung ist in den Zeichnungen dargestellt und wird im folgenden näher erläutert. Dabei zeigen:
- FIG 1: Verlauf der implementierten geschwindigkeitsabhängigen Beschleunigungsbegrenzungskennlinie,
- FIG 2: Geschwindigkeitsverlauf zum Anfahren auf eine vorgegebene Sollgeschwindigkeit mit anschließendem Abbremsen auf eine definierte Zielgeschwindigkeit zu einem bestimmten Zielpunkt unter Berücksichtigung der Beschleunigungsbegrenzung nach FIG 1 und
- FIG 3: Beschleunigungsverlauf zur Ansteuerung einer vorgegebenen Sollgeschwindigkeit und Abbremsen auf eine Zielgeschwindigkeit zu einem definierten Zielpunkt unter Berückksichtigung der Beschleunigungsbegrenzung nach FIG 1.

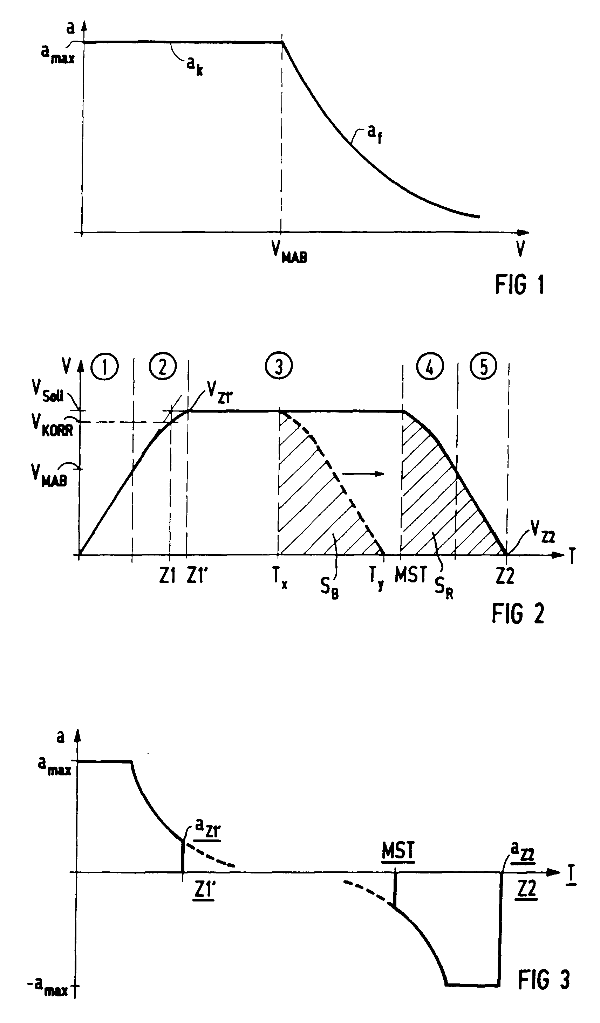

In der Darstellung gemäß FIG 1 ist ein Diagramm gezeigt, welches den Verlauf der gemäß vorliegender Erfindung vorteilhaft zu implementierenden Beschleunigungsbegrenzung beschreibt. Dabei ist der Verlauf der Beschleunigung a über die Geschwindigkeit V, welche gleichbedeutend mit der Drehzahl des elektrischen Antriebes ist, aufgetragen. Zwischen einer Drehzahl bzw. Geschwindigkeit V = 0 und einer Geschwindigkeit V_{MAB}, ab der ein Abfall des Drehmomentes des elektrischen Antriebes auftritt, wird die Beschleunigung a auf eine konstante Beschleunigung aₖ begrenzt. Jenseits der Drehzahl bzw. Geschwindigkeit V_{MAB} mit abfallendem Drehmoment bewirkt die Beschleunigungsbegrenzung eine fallende Beschleunigung a_{f}, insbesondere mit hyperbolischem Verlauf der Kennlinie.

In der Darstellung gemäß FIG 2 ist ein Diagramm gezeigt, in dem der Verlauf der Geschwindkeit V über der Zeit T aufgetragen ist. Dabei werden unter Berücksichtigung der Beschleunigungsbegrenzung entsprechend FIG 1 folgende Sollvorgaben berücksichtigt. Es wird auf eine aktuell vorgegebene Sollgeschwindigkeit V_{Z1'} gefahren, die zu einem definierten Zeitpunkt Z1' erreicht wird, der von der möglichen Beschleunigung abhängt. Dabei steigt die Geschwindigkeit in einer ersten Phase 1 konstant bis zur Geschwindigkeit V_{MAB} an, wohingegen der Geschwindigkeitsverlauf in einer zweiten Phase 2 nur noch in Abhängigkeit der geschwindigkeitsabhängigen Beschleunigungskennlinie aus FIG 1 mit abnehmenden Geschwindigkeitszuwachsen bis zum Wert der vorgegebenen Sollgeschwindigkeit V_{Soll} ansteigt. Am Ende von Phase 2 ist die Sollgeschwindigkeit V_{Soll} erreicht, entsprechend dem Zeitpunkt Z1'. In der Phase 3 verläuft die Geschwindigkeit konstant ehe sie in einer anschließenden Phase 4 zu einem möglichst späten Zeitpunkt MST wieder abnimmt und zwar degressiv bis zum Erreichen der Geschwindigkeit V_{MAB}, ab der der Drehzahlbereich erreicht ist, in dem wieder ein konstantes Drehmoment auftritt. In der anschließenden Phase 5 nimmt die Geschwindigkeit konstant bis zum Erreichen des Zielpunktes Z2 mit der definierten Zielgeschwindigkeit V_{Z2} ab. Der Anschaulichkeit halber wurde V_{Z2} im skizzierten Fall gleich NULL gewählt. Der Zeitpunkt Z1 markiert den Zeitpunkt, zu dem die Sollgeschwindigkeit V_{Soll} bei einer konstant hohen Beschleunigung aₘₐₓ erreicht wäre, unter Zugrundelegung der erfindungsgemäßen geschwindigkeitsabhängigen Beschleunigungskennlinie jedoch nun eine entsprechend niedrigere Geschwindigkeit V_{KORR} erreicht wird. Der Zeitpunkt Tₓ stellt einen beliebigen Punkt im Ablauf dar, zu dem der unter Berücksichtigung der Beschleunigungsmöglichkeiten nötige Bremsweg S_{B} zum Erreichen der vorgegebenen Zielgeschwindigkeit V_{Ziel} berechnet wird.

Der dabei ermittelte Zeitpunkt T_{y} wird mit dem Zielpunkt Z2 verglichen und eine Wegreserve S_{R} bestimmt, um zu entscheiden, ob ein Abbremsvorgang eingeleitet werden muß oder nicht. Beide skizierten Fälle des Abbremsen sind dadurch gekennzeichnet, daß der Verlauf unter der Geschwindigkeit V schraffiert dargestellt ist. Ein Pfeil, welcher sich an neben dem fiktiven Abbremsvorgang befindet, verdeutlicht, daß dieses Zeitfenster erfindungsgemäß ständig vor dem aktuellen Zeitpunkt Tₓ hergeschoben wird.

In der Darstellung gemäß FIG 3 ist ein Diagramm gezeigt, in dem die Beschleunigung a für den Geschwindigkeitsverlauf aus FIG 2 über die Zeit T aufgetragen ist. Dabei entsprechen alle Zeitpunkte auf der Zeitachse T den Zeitpunkten der Zeitachse T aus FIG 2. In Phase 1 wird die Geschwindigkeit mit konstanter maximaler Beschleunigung aₘₐₓ bis zum Erreichen der kritischen Geschwindigkeit V_{MAB} erhöht. In der sich anschließenden Phase 2 nimmt die Beschleunigung bis zum Erreichen der gewünschten Sollgeschwindigkeit V_{Soll} auf a_{Z1}_{'} entsprechend der Beschleunigungskennlinie aus FIG 1 ab, wobei die Beschleunigung insbesondere in Anlehnung an FIG 1 einen hyperbolischen abnehmenden Verlauf einnimmt. Jedoch kann der abnehmende Verlauf a_{f} auch eine exponentielle oder logarithmische Form aufweisen. In Phase 3 ist die Sollgeschwindigkeit V_{Soll} zum definierten Zeitpunkt Z1' erreicht und die Beschleunigung fällt mit dem Erreichen von a_{Z1'} auf NULL. In Phase 4, in der die Geschwindigkeit abgebremst wird, nimmt die Beschleunigung einen negativen Verlauf an. Da sich die Geschwindigkeit zu einem möglichst späten Zeitpunkt MST im kritischen Drehzahlbereich größer als V_{MAB} befindet, steigt die negative Beschleunigung entsprechend der hyperbolischen Kennlinie aus FIG 1 bis zum Erreichen der maximalen negativen Beschleunigungswertes -aₘₐₓ progressiv an, bis auf die Geschwindigkeit V_{MAB} abgebremst worden ist. In der sich anschließenden Phase 5 schließlich wird aufgrund des konstanten Drehmomentes mit einer konstanten negativen Beschleunigung - aₘₐₓ bis zum Erreichen der Zielgeschwindigkeit zum definierten Zielpunkt Z2 abgebremst, wonach die Beschleunigung direkt auf den Wert NULL zurückkehrt.

Zur Vermeidung einer Überlastung der elektrischen Antriebe aufgrund eines Abfalls des Drehmomentes bei höheren Drehzahlen wird die Bahngeschwindigkeit gemäß der vorliegenden Erfindung derart geführt, daß eine Beschleunigungskennlinie im Drehzahlbereich des elektrischen Antriebes mit konstant hohem Drehmoment, in der Regel im niedrigeren Geschwindigkeitsbereich, mit konstanter Beschleunigung aₖ geführt wird. Im Bereich höherer Achsgeschwindigkeiten jenseites der Drehzahl bzw. Geschwindigkeit V_{MAB}, ab der das Drehmoment des elektrischen Antriebes abfällt, berücksichtigt die vorliegende Beschleunigungsbegrenzung erfindungsgemäß diesen in der Regel bei höheren Drehzahlen auftretenden Sachverhalt, indem die Beschleunigung so geführt wird, daß auch sie entsprechend dem Verlauf des Drehmoments abfällt. In diesem Bereich fallender Beschleunigung a_{f} kann die Beschleunigungskennlinie auf unterschiedliche Art und Weise fallend verlaufen. Der genaue fallende Verlauf der Beschleunigung hängt im wesentlichen vom Verlauf des Drehmoments im abfallenden Bereich ab. Aufgrund der technischen Eigenschaften bei elektrischen Antrieben, wonach des Drehmoment proportional zum Umkehrwert der Feldstärke mit deren Zunahme abnimmt und der dadurch bedingten Form des Drehmomentabfalls bei höheren Achsgeschwindigkeiten beschreibt der Bereich einer fallenden Beschleunigungsbegrenzung a_{f} vorteilhafterweise eine hyperbolische Kennlinie. Im Bereich niedrigerer Drehzahlen und Achsgeschwindigkeiten mit konstantem Drehmoment ist der elektrische Antrieb in der Regel in der Lage, eine den Anforderungen entsprechend hohe Achsbeschleunigung aufzubringen. Aus diesem Grund bedarf es in diesem Bereich lediglich einer konstanten Beschleunigungsbegrenzung, da man bestrebt ist, die Leistungsfähigkeit der Maschine und damit das volle Drehmoment auszunutzen. Im kritischen Drehzahlbereich, rechts der kritischen Geschwindigkeit V_{MAB} verringert sich aufgrund des fallenden Drehmomentes die mögliche Achsbeschleunigung eines elektrischen Antriebes. Je nach Anwendungsfall können bei der Festlegung des exakten Verlaufs der geschwindigkeitsabhängigen Beschleunigungskennlinie zusätzlich noch Einflüsse berücksichtigt werden, die für eine lineare Drehmomentabnahme verantwortlich zeichnen. Dies können beispielsweise Reibungseffekte aufgrund einer viskosen Lagerung des verwendeten elektrischen Antriebes sein. Weitere eventuell zu berücksichtigende Einflüsse hängen im einzelnen von dem jeweils verwendeten elektrischen Antrieb ab.

Sehen nun die Steuerungsdaten, z.B. im Rahmen einer NC-Steuerung einer Werkzeugmaschine, auch in diesem kritischen Drehzahlbereich bei hohen Achsgeschwindigkeiten eine Vorschubgeschwindigkeit vor, die eine maximale Achsbeschleunigung über den gesamten Drehzahlbereich erfordert, so tritt das Problem auf, daß der Antrieb gewissermaßen mit den Anforderungen nicht mehr mitkommt. Es resultiert daraus ein axialer Schleppfehler, wodurch das Werkzeug am zu bearbeitenden Werkstück eine Bahn beschreit, die von der gewünschten programmierten Bahnführung abweicht. Daraus resultiert ein Konturfehler, welcher jedoch aufgrund der heutigen hohen Anforderungen an Toleranz und Genauigkeit vermieden werden muß. Aus diesem Grund wird in diesen kritischen Drehzahlbereichen mit hoher Achsgeschwindigkeit bei vorliegender Erfindung die mögliche Achsbeschleunigung auf das maximal vorhandene Drehmoment begrenzt, was durch den fallenden Beschleunigungsverlauf a_{f} bewirkt wird. Sollen weitere Optionen wie beispielsweise ein eventuell vorhandener Vorschuboverride berücksichtigt werden, so werden die Beschleunigungsmöglichkeiten des elektrischen Antriebes bei der Konstruktion der geschwindigkeitsabhängigen Beschleunigungskennlinie nicht von vornherein vollständig ausgeschöpft, sondern es wird ein Puffer als Regelreserve einkalkuliert.

Die Geschwindigkeitsführung gemäß vorliegender Erfindung berücksichtigt zum einen eine jeweils aktuell vorgegebene Sollgeschwindigkeit V_{Soll}, die im Sinne einer möglichst beizubehaltenden Geschwindigkeitsobergrenze anfahren wird, sowie eine Zielgeschwindigkeit V_{Ziel}, die zu einem genau definierten Zielpunkt, z.B. am Satzendpunkt bzw. an einem folgenden Satzendpunkt der Steuerungsdaten, erreicht werden muß. Daraus ergeben sich bei der Verwendung einer geschwindigkeitsabhängigen Beschleunigungsbegrenzung Probleme, insbesondere beim Abbremsen, also einer negativen Beschleunigung. Da die mögliche Beschleunigung, welche zum Abbremsen benötigt wird, im kritischen Drehzahlbereich kleiner ist als eine konstant hohe Beschleunigung aₘₐₓ, wird eine Anpassung der Sollvorgaben an die Geschwindigkeitsführung mit Berücksichtigung einer geschwindigkeitsabhängigen Beschleunigungsbegrenzung gemäß vorliegender Erfindung notwendig. Dies betrifft begreiflicherweise nicht den niedrigen Drehzahlbereich zwischen V = 0 und V_{MAB}, in dem die volle Achsbeschleunigung ausgenutzt werden kann, sondern den kritischen Drehzahlbereich jenseits von V_{MAB}, in dem das Drehmoment abfällt und die maximale Achsbeschleunigung gemäß der Erfindung begrenzt wird. Enthalten Steuerungsdaten nun z.B. eine Vorschubgeschwindigkeit, wonach die Sollgeschwindigkeit V_{Soll} im Sinne einer beizubehaltenden Geschwindigkeitsobergrenze zu einem definierten Zeitpunkt Z1 als Zielgeschwindigkeit erreicht werden müßte, so müssen unter Berücksichtigung der erfindungsgemäßen geschwindigkeitsabhängigen Beschleunigungsbegrenzung sowohl Sollgeschwindigkeit V_{Soll} und Zeitpunkt Z1 korrigiert werden. Dies wirkt sich zwar auf die programmierte Vorschubgeschwindigkeit aus, vermeidet jedoch axiale Schleppfehler und dadurch bedingte Konturfehler. Da die maximale Achsbeschleunigung im kritischen Drehzahlbereich geringer ist als die in den Steuerungsdaten erwartete Beschleunigung aₘₐₓ, kann die zum Zeitpunkt Z1 erreichbare Geschwindigkeit V_{KORR}, die korrigierte Geschwindigkeit, nur geringer sein als die vorgegebene Sollgeschwindigkeit V_{Soll}. Da aus diesem Grunde eventuell nicht immer auf das gewünschte Maximum der Sollgeschwindigkeit gefahren werden kann, müssen die Sollgeschwindigkeiten korrigiert werden, um zu verhindern, daß der elektrische Antrieb überlastet wird und eventuell axiale Schleppfehler auftreten. Deshalb werden die Steuerungsdaten derart angepaßt, daß zum vorgegebenen Zeitpunkt Z1 nicht die ursprünglich angesetzte Sollgeschwindigkeit V_{Soll}, sondern die geringere korrigierte Geschwindigkeit V_{KORR} zugrunde gelegt wird. Die ursprüngliche vorgegebene Sollgeschwindigkeit V_{Soll} wird daher aufgrund der durch die Beschleunigungskennlinie bedingten degressiven Geschwindigkeitszuwächse erst zu einem späteren Zeitpunkt Z1' als vorgegebene Sollgeschwindigkeit erreicht, um möglichst als Geschwindigkeitsobergrenze beibehalten werden zu können.

Der Verlauf der Beschleunigung a entspricht dabei exakt der Beschleunigungsbegrenzungkennlinie gemäß der Erfindung. Bei Erreichen der Geschwindigkeitsobergrenze V_{Soll} zum Zeitpunkt Z1' bzw. Z1' ist die Beschleunigung schließlich auf den Wert a_{Z1} abgesunken. Der Übergang auf Sollgeschwindigkeit V_{Soll} beschreibt einen geringfügigen Knick, was sich auf die Beschleunigung auswirkt, indem sie mit dem Erreichen von V_{Soll} nicht bereits auf NULL abgesunken ist, sondern einen Sprung von a_{Z1} auf NULL erfährt.

Auf eine Zielgeschwindigkeit zu einem vorgegebenen Zielpunkt soll zu einem möglichst späten Zeitpunkt MST vorausschauend abgebremst werden, so daß die Zielgeschwindigkeit V_{Ziel} sicher zum vorgegebenen Zielpunkt Z2 bzw. Z2 mit einer Beschleunigung von 0 erreicht wird. Um im Rahmen der Geschwindigkeitsführung mit geschwindigkeitsabhängiger Beschleunigungsbegrenzung gemäß der vorliegenden Erfindung von der erreichten Geschwindigkeitsobergrenze V_{Soll} auf eine Zielgeschwindigkeit V_{Ziel}, z.B. eine Geschwindigkeit von NULL, abzubremsen, muß unter Berücksichtigung der geschwindigkeitsabhängigen Beschleunigungsbegrenzung der möglichst späte Zeitpunkt MST, ab dem der Bremsvorgang beginnen soll, ständig neu bestimmt werden. Dabei muß berücksichtigt werden, daß gerade im kritischen hohen Drehzahlbereich lediglich eine geringere Achsbeschleunigung zur Verfügung steht. Liegt also ein Teil der Zielanfahrphase im Bereich a_{f} der fallenden Beschleunigungskennlinie, so muß aus diesem Grund mit jedem Takt der Bremsweg S_{B} bestimmt werden, der benötigt wird, um von der Momentangeschwindigkeit, hier der Sollgeschwindigkeit V_{Soll} zum momentanen Zeitpunkt Tₓ, auf die Zielgeschwindigkeit V_{Ziel} abzubremsen. Gemäß der geschwindigkeitsabhängigen Beschleunigungskennlinie wird dazu die mögliche Geschwindigkeitsänderung im Takt abgeschätzt. Der daraus errechnete Bremsweg S_{B} wird ständig mit dem noch zu verfahrenden bzw. zur Verfügung stehenden Weg bis zum Zielpunkt Z2 verglichen und eine eventuelle Wegreserve S_{R} zischen dem ermittelten Zeitpunkt T_{y} und dem geforderten Zielpunkt Z2 bestimmt. Ist eine solche Wegreserve nicht mehr vorhanden, so ist der möglichst späte Zeitpunkt MST erreicht und der Abbremsvorgang wird eingeleitet.

Um auch in Rechenzeit intensiven Anwendungsfällen das Verfahren gemäß der vorliegenden Erfindung einsetzen zu können, kann zur Verringerung des Rechenaufwands die Beschleunigung während der Dauer eines Taktes als konstant betrachtet werden. Eventuell dabei auftretende geringe Überlastungen des elektrischen Antriebes relativ zur vorgegebenen geschwindigkeitsabhängigen Beschleunigungskennlinie fallen bei üblichen Interpolationstakten nicht ins Gewicht. Die Ansteuerung beispielsweise eines kubischen Feininterpolators wird durch ein solches Vorgehen jedoch vereinfacht.

Auf diese Art und Weise ist es möglich, innerhalb eines Satzes auf die Zielgeschwindigkeit V_{Ziel} mit Beschleunigung a_{Z2} = 0 abzubremsen. Das erfindungsgemäße Verfahren einer Geschwindigkeitsführung mit Berücksichtigung einer geschwindigkeitsabhängigen Beschleunigungsbegrenzung der vorgestellten Art leistet somit über die eigentliche Begrenzung der Beschleunigung im kritischen Drehzahlbereich hinaus eine ständige Anpassung an die oben dargestellten Sollvorgaben hinsichtlich der sich neu ergebenden Beschleunigungsmöglichkeiten.

## Patentansprüche

1. Verfahren zur Geschwindigkeitsführung von elektrischen Antrieben mit folgenden Verfahrensschritten:
1.1 die Bahngeschwindigkeit (V) wird so geführt, daß eine Beschleunigungsbegrenzung**skennlinie** berücksichtigt wird, **indem** die Beschleunigungskennlinie im Geschwindigkeitsbereich des Antriebes mit konstantem Drehmoment mit konstanter Beschleunigung (aₖ) verläuft und im Drehzahlbereich des Antriebes mit abfallendem Drehmoment mit daran angepaßter fallender Beschleunigung (a_{f}) verläuft,
1.2 **nach Anfahren einer** Sollgeschwindigkeit (V_{Soll}) wird auf **dieser** mit **konstanter Geschwindigkeit im Sinne einer** Geschwindigkeitsobergrenze **ver**fahren,
1.3 vorgegebene Zielgeschwindigkeiten (V_{Ziel}) an bestimmten Zielpunkten (Z2,Z2) werden **angefahren**,
1.4 auf **solche** Zielgeschwindigkeiten (V_{Ziel}) wird unter Berücksichtigung **eines durch die** geschwindigkeitsabhängige Beschleunigungskennlinie (GBK) **bedingten kürzestmöglichen Bremswegs (S**_{**B**}**)** vorausschauend zu einem möglichst späten Zeitpunkt (MST,MST) so abgebremst, daß die Zielgeschwindigkeit (V_{Ziel}) am Zielpunkt (Z2,Z2) mit Beschleunigung (a_{Z2}) Null erreicht wird.

2. Verfahren nach Anspruch 1, **gekennzeichnet** duch folgende **weitere Verfahrensschritte:**
2.1 liegt ein Teil der Zielanfahrphase zum vorausschauenden Abbremsen auf Zielgeschwindigkeit (V_{Ziel}) zum Zielpunkt (Z2,Z2) im Bereich der fallenden (a_{f}) Beschleunigungskennlinie, so wird bei einer taktgesteuerten Geschwindigkeitsführung in jedem Takt der **durch die geschwindigkeitsabhängige Beschleunigungskennlinie (GBK) bedingte kürzestmögliche** Bremsweg (S_{B}) erneut bestimmt und eine eventuell daraus resultierende Wegreserve (S_{R}) ermittelt,
2.2 sofern keine Wegreserve (S_{R}) mehr besteht, wird der Abbremsvorgang eingeleitet.

3. Verfahren nach Anspruch 1, **gekennzeichnet** duch folgende Merkmale:
3.1 die Beschleunigungskennlinie (GBK) beschreibt im Bereich fallender Beschleunigung (a_{f}) einen hyperbolischen Verlauf,
3.2 die geschwindigkeitsabhängige Beschleunigungskennlinie wird so geführt, daß sie die Beschleunigungsmöglichkeiten eines elektrischen Antriebes nicht vollständig ausschöpft, sondern es wird ein Puffer als Regelreserve beispielsweise für die Berücksichtigung eines Vorschuboverrides belassen,
3.3 zur Verringerung des Rechenaufwands wird die Beschleunigung während der Dauer eines Taktes als konstant betrachtet.

## Claims

1. Method for the velocity control of electric drives with the following method steps:
1.1 the tool path velocity (V) is so controlled that an acceleration limitation characteristic is allowed for by the fact that the acceleration characteristic runs in the speed range of the drive with constant torque with constant acceleration (aₖ) and runs in the speed range of the drive with dropping torque with falling acceleration (af) adjusted thereto,
1.2 after initiation of a desired velocity (V_{Soll}) the machine is run at the latter at constant velocity in accordance with an upper velocity limit,
1.3 preselected target velocities (V_{Ziel}) are initiated at particular target points (Z2, Z2),
1.4 it is braked to such target velocities (V_{Ziel}), taking account of a shortest possible braking path (S_{B}) determined by the velocity-dependent acceleration characteristic (GBK) and looking ahead to a latest possible point in time (MST, MST), in such a way that the target velocity (V_{Ziel}) is reached at the target point (Z2, Z2) with zero acceleration (a_{Z2}).

2. Method according to claim 1, characterised by the following further method steps:
2.1 if a part of the target start-up phase for the look-ahead braking to target velocity (V_{Ziel}) at the target point (Z2, Z2) lies in the range of the falling (a_{f}) acceleration characteristic, there is determined once again with a clocked velocity control in each clock pulse the shortest possible braking path (S_{B}) determined by the velocity-dependent acceleration characteristic (GBK) and a travel standby (S_{R}) possibly resulting therefrom is established,
2.2 if a travel standby (S_{R}) no longer exists, the braking procedure is initiated.

3. Method according to claim 1, characterised by the following features:
3.1 the acceleration characteristic (GBK) describes in the range of falling acceleration (a_{f}) a hyperbolic course,
3.2 the velocity-dependent acceleration characteristic is so controlled that it does not fully exhaust the acceleration possibilities of an electric drive, but a buffer is left as a control standby for example for allowing for a feed override,
3.3 in order to reduce the computation level, the acceleration is regarded as constant during the period of a clock pulse.

## Revendications

1. Procédé de commande de vitesse de dispositifs d'entraînement électriques, comprenant les étapes suivantes :
1.1 on commande la vitesse de trajectoire (V) de manière à prendre en compte une courbe caractéristique de limitation d'accélération de telle sorte que la courbe caractéristique d'accélération s'étend dans le domaine de vitesse du dispositif d'entraînement avec un couple constant avec une accélération (aₖ) constante et s'étend dans le domaine de vitesse de rotation du dispositif d'entraînement avec un couple décroissant avec une accélération décroissante (a_{f}) adaptée,
1.2 après s'être rapproché d'une vitesse de consigne (V_{Soll}), on vient sur celle-ci avec une vitesse constante dans le sens d'une limite supérieure de vitesse,
1.3 on s'approche des vitesses visées prescrites (V_{Ziel}) en des points visés déterminés (Z2, Z2),
1.4 on freine à des vitesses visées de ce genre (V_{Ziel}), en tenant compte d'une distance de freinage (S_{B}) la plus courte possible conditionnée par la courbe caractéristique d'accélération (GBK) dépendante de la vitesse, par anticipation à l'instant le plus tardif possible (MST, MST) de telle sorte que la vitesse visée (VZiel) est atteinte au point visé (Z2, Z2) avec une accélération (a_{Z2}) nulle.

2. Procédé selon la revendication 1, caractérisé par les autres étapes suivantes :
2.1 si une partie de la phase d'approche de but pour le freinage anticipé à la vitesse visée (V_{Ziel}) au point visé (Z2, Z2) se trouve dans le domaine de la courbe caractéristique d'accélération décroissante (a_{f}), on détermine de nouveau à chaque cycle, dans le cas d'une commande de vitesse cyclique, la distance de freinage (S_{B}) la plus courte possible conditionnée par la courbe caractéristique d'accélération (GBK) dépendante de la vitesse et on détermine une marge de freinage (S_{R}) éventuellement résultante,
2.2 dans la mesure où il n'existe plus de marge de freinage (S_{R}), on déclenche l'opération de freinage.

3. Procédé selon la revendication 1, avec les caractéristiques suivantes :
3.1 la courbe caractéristique d'accélération (GBK) décrit dans le domaine de l'accélération décroissante (a_{f}) une hyperbole,
3.2 on commande la courbe caractéristique d'accélération dépendante de la vitesse de telle sorte qu'elle n'épuise pas complètement les possibilités d'accélération d'un dispositif d'entraînement électrique mais on laisse un tampon comme réserve de réglage par exemple pour la prise en compte d'un dépassement d'avance,
3.3 pour réduire le coût de calcul, on considère comme constante l'accélération sur la durée d'un cycle.
